# EUROPÄISCHE PATENTANMELDUNG

(11) **EP 2 987 428 A1**
(43) Veröffentlichungstag der Anmeldung: **24.02.2016**
(21) Anmeldenummer: 15177788.5
(22) Anmeldetag: 22.07.2015
(51) Int. Cl.: A47B 88/04, F16H 19/06

(54) **ANTRIEBSVORRICHTUNG FÜR EIN MÖBELTEIL**

(30) Priorität: 21.08.2014 DE 202014103875 U
(71) Anmelder: Grass GmbH, 6973 Höchst (AT)
(72) Erfinder: Krüse, Christian, 6900 Bregenz (AT)
(74) Vertreter: Otten, Roth, Dobler & Partner mbB Patentanwälte

(57) **Zusammenfassung**

Es wird eine Antriebsvorrichtung (1) für ein Möbelteil mit einem Drehelement (8, 9) vorgeschlagen, das in der Antriebsvorrichtung um eine Drehachse (16) drehbar gelagert ist. Erfindungsgemäß ist in Richtung der Drehachse (16) ein Zwischenraum zwischen dem Drehelement (8, 9) und einem Gegenelement ausgebildet, wobei das Drehelement (8, 9) mit dem Gegenelement durch mindestens einen Faden (10, 11, 12, 13) verbunden ist, der entlang der Drehachse (16) im Zwischenraum geführt ist, wobei der Faden (10, 11, 12, 13) am Drehelement (8, 9) und am Gegenelement derart befestigt ist, dass der Faden (10, 11, 12, 13) durch eine Drehbewegung des Drehelements (8, 9) gegenüber dem Gegenelement mit einer Torsionskraft beaufschlagbar ist, mit der sich das Möbelteil bewegen lässt.

## Beschreibung

Die Erfindung betrifft eine Antriebsvorrichtung für ein Möbelteil nach dem Oberbegriff des Anspruchs 1 sowie ein Möbel.

### Stand der Technik

Antriebsvorrichtungen sind auf dem Gebiet des Möbelbaus in unterschiedlichsten Ausführungen bekannt. Insbesondere sind Antriebsvorrichtungen bekannt, bei denen eine Schrauben-, Spiral- oder Gasfeder zum mechanischen Zwischenspeichern von Energie vorgesehen ist.

Der Erfindung liegt die Aufgabe zugrunde, eine Antriebsvorrichtung bereitzustellen, die sich in einem engen Raumbereich eines Möbels unterbringen lässt.

Die Aufgabe wird mit einer Antriebsvorrichtung gelöst, die die Merkmale des Anspruchs 1 aufweist.

Bevorzugte und vorteilhafte Ausführungen der Erfindung sind in den Unteransprüchen angegeben.

Die Erfindung geht von einer Antriebsvorrichtung für ein Möbelteil mit einem Drehelement aus, das in der Antriebsvorrichtung um eine Drehachse drehbar gelagert ist. Der Kern der Erfindung besteht darin, dass in Richtung der Drehachse ein Zwischenraum zwischen dem Drehelement und einem Gegenelement ausgebildet ist, wobei das Drehelement mit dem Gegenelement durch mindestens einen Faden verbunden ist, der entlang der Drehachse im Zwischenraum geführt ist, wobei der Faden am Drehelement und am Gegenelement derart befestigt ist, dass der Faden durch eine Drehbewegung des Drehelements gegenüber dem Gegenelement mit einer Torsionskraft beaufschlagbar ist, mit der sich das Möbelteil bewegen lässt.

Mit dem Faden steht ein Spannelement zur Verfügung, das sich im Vergleich zu einem Federelement wie z.B. einer Schrauben-, einer Spiral- oder einer Gasfeder vorteilhaft mit einem geringeren Raumbedarf und insbesondere mit geringerem Gewicht ausbilden lässt. In Kombination mit einem Antriebsmotor lässt sich die erfindungsgemäße Vorrichtung auch vorteilhaft als elastisches Übertragungselement für eine Drehbewegung einsetzen.

Der Faden kann z.B. am Drehelement oder z.B. am Gegenelement drehfest fixiert sein. Für eine vergleichsweise genau wiederholbare Speicherung einer Spannung ist der Faden vorzugsweise am Drehelement und am Gegenelement drehfest fixiert.

Der Faden ist vorzugsweise ein Garn aus mehreren gleichen oder unterschiedlichen Fasern. Das Material der Fasern kann zum Beispiel Nylon, Baumwolle, Sisal und gegebenenfalls eine Kombination von mehreren verschiedenen Materialien sein. Einer Dicke des Fadens entsprechend kann der Faden eine einzelne Faser oder eine Vielzahl von Fasern umfassen, die z.B. eine Schnur oder z.B. ein Seil bilden. Der Faden oder zumindest einzelne Fasern des Fadens können zugfest oder zugelastisch sein.

Eine bevorzugte Ausführung der Erfindung besteht darin, dass die Antriebsvorrichtung eine Arretiereinrichtung aufweist, mit der die Torsionskraft speicherbar ist. Beispielsweise kann das Drehelement mit einer z.B. Freilaufmechanik gekoppelt sein, mit der sich das Drehelement zum Spannen des Fadens in eine Drehrichtung verwinden lässt, wogegen einen entgegengesetzte Drehung durch den Freilauf blockiert sein kann. Vorzugsweise ist eine Entriegelungseinrichtung vorgesehen, durch deren Betätigung eine Drehbewegung zur Freisetzung der Spannung und damit der Energie im verwundenen Faden freigebbar ist.

Des Weiteren ist es bevorzugt, dass das Drehelement und das Gegenelement durch mehrere Fäden entlang der Drehachse durch den Zwischenraum hindurch verbunden sind. Dies ermöglicht eine vorteilhafte Verkleinerung des Zwischenraums.

Die Antriebsvorrichtung kann mehrere Drehelemente aufweisen, die durch zumindest einen Faden mit dem Gegenelement verbunden sind. Vorzugsweise ist das Gegenelement mit einem Gehäuse der Antriebsvorrichtung verbunden.

Des Weiteren ist es bevorzugt, dass das Drehelement Bestandteil eines Zahnradgetriebes ist. Dadurch lässt sich beispielsweise eine Spannen des Fadens oder einer Mehrzahl der Fäden auf einen Bewegungsbereich eine z.B. verschiebbaren Möbelteils abstimmen.

Das Drehelement ist dabei vorzugsweise ein Planetenrad eines Planetengetriebes. Die Drehachse des Drehelements kann dabei also beweglich in der Antriebsvorrichtung angeordnet sein, wobei der Faden z.B. an der Drehachse des Planetenrads fixiert sein kann. Vorzugsweise ist das Drehelement in axialer Richtung drehbar gelagert, wodurch ein Axiallager eine Gegenkraft zur Spannung des verwundenen Fadens aufbringen kann.

Eine weitere bevorzugte Ausführung der Erfindung besteht darin, dass das Drehelement ein Sonnenrad eines Planetengetriebes ist. Die Antriebsvorrichtung kann insbesondere mehrere Drehelemente aufweisen, die gemeinsam ein Planetengetriebe bilden. Dabei können beispielsweise die Planetenräder neben einer Verwindung der daran angebrachten Fäden zusätzlich umeinander wickeln bzw. spinnen, um dadurch eine zusätzliche Zugspannung aufbauen und freisetzen zu können.

Eine bevorzugte Ausführung der Erfindung besteht darin, dass der Faden Fasern aufweist, die eine Kohlenstoff-Nanoröhre umfassen. Kohlenstoff-Nanoröhren bieten den Vorteil, dass sie bei vergleichsweise geringem Gewicht eine relativ hohe Zugfestigkeit und Torsionsfestigkeit aufweisen.

Der Faden kann des Weiteren eine Faser aus Metall, insbesondere einen Metalldraht, umfassen, mit der eine vergleichsweise hohe Spannkraft durch eine Zugkraft und eine Torsionskraft erreichbar ist. Zusätzlich ist der Faden mit einer metallischen Faser vorteilhaft als eine elektrische Leitung verwendbar.

Eine besonders bevorzugte Ausführung der Erfindung besteht darin, insbesondere wenn die Antriebsvorrichtung ein Planetengetriebe umfasst, dass entlang der Drehachse konzentrisch ein Mittelfaden angeordnet ist. Daraus lässt sich vorteilhaft ein exzentrisch angeordneter Faden um den Mittelfaden herum spinnen, wenn die erfindungsgemäße Antriebsvorrichtung beispielsweise unter Spannung gesetzt wird.

Die Antriebsvorrichtung kann eine Heizeinrichtung umfassen, die zum Erwärmen des Fadens vorgesehen ist. Je nach thermischen Ausdehnungskoeffizienten des Materials von ein oder mehreren Fäden sind durch beispielsweise eine gezielte Erwärmung eine Längenausdehnung oder auch eine Spannung im Faden im spannungsfreien oder in einem aufgewickelten Zustand veränderbar.

Der Faden kann beispielsweise zwischen zwei Elektroden angeordnet sein, um den Faden durch den elektrischen Widerstand des Fadens mit einer angelegten Stromstärke zu erwärmen. Dabei können das Drehelement und das Gegenelement als Elektroden ausgebildet und mit einer Stromquelle verbindbar sein.

Des Weiteren besteht die Möglichkeit durch magnetische Einwirkung die Eigenschaften des Fadens, die insbesondere sich auf dessen mechanischen Spannungszustand auswirken, zu verändern, beispielsweise indem der Faden innerhalb einer Elektromagnetspule angeordnet ist, mit der sich der Faden einer einstellbaren magnetischen Feldstärke aussetzen lässt.

Nachfolgend wird die Erfindung an Ausführungsbeispielen erläutert und mit Hilfe von unmaßstäblichen Zeichnungen beschrieben. Es zeigen:
- Figur 1: eine schematische Darstellung einer erfindungsgemäßen Antriebsvorrichtung in Form eines Diagramms,
- Figur 2: eine schematische frontale Ansicht einer Stirnseite eines Planetengetriebes,
- Figur 3: eine schematische Ansicht von mehreren Fäden einer erfindungsgemäßen Antriebsvorrichtung im Schnitt quer zu Längsrichtungen der Fäden,
- Figur 4: eine schematische perspektivische Ansicht mehrerer Fäden,
- Figur 5: eine schematische perspektivische Ansicht einer erfindungsgemäßen Antriebsvorrichtung.

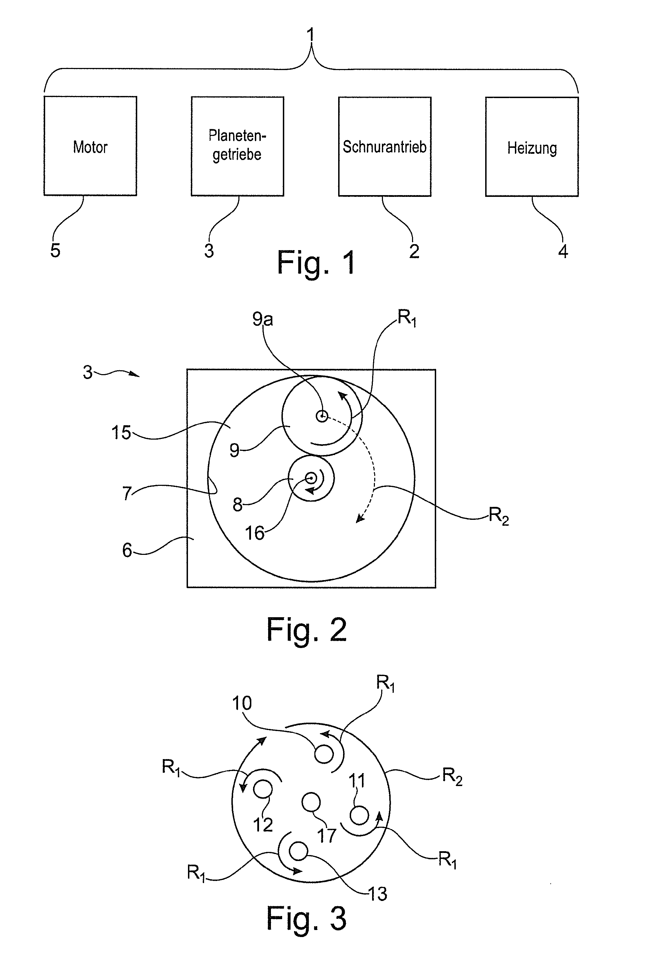

In Figur 1 ist ein Ausführungsbeispiel einer erfindungsgemäßen Antriebsvorrichtung 1 gezeigt, wobei mehrere verschiedene Komponenten 2, 3, 4 und 5 der Antriebsvorrichtung in einem Diagramm schematisch dargestellt sind.

Die Antriebsvorrichtung 1 weist einen Schnurantrieb 2 auf, der einen Faden - z.B. Faden 10 - oder eine Mehrzahl von Fäden 10, 11, 12, 13 aufweisen kann, wie sie beispielsweise in Fig. 3 gezeigt sind. Die Mehrzahl der Fäden 10, 11, 12, 13 wird nachfolgend als Fadenbündel bezeichnet. Der Faden 10 und insbesondere jeder Faden 10, 11, 12, 13 des Fadenbündels ist dabei durch einen Zwischenraum geführt und vorzugsweise an einem Drehelement und an einem Gegenelement, das dem Drehelement bezüglich des Zwischenraumes gegenüberliegt, fixiert. Das Drehelement kann durch ein Planetengetriebe 3 angetrieben sein, wobei das Drehelement gegebenenfalls ein Bestandteil des Planetengetriebes 3 ist. Die Antriebsvorrichtung kann einen Motor umfassen, der beispielsweise derart an das Planetengetriebe gekoppelt sein kann, dass der Motor als Ersatz für den Schnurantrieb betreibbar ist. Des Weiteren kann der Motor zum Antreiben des Planetengetriebes und des Schurantriebs vorgesehen sein.

Die Antriebsvorrichtung 1 kann des Weiteren mit einer Heizung versehen sein, mit der sich eine Spannung des Fadens 10, 11, 12, 13 thermisch verändern lässt, um z.B. eine zusätzliche Zugkraft für einen Stellvorgang an einem Möbel, insbesondere an einem Möbelteil aufzubringen. Beispielsweise kann die Heizung zum Erwärmen eines Metallkerns bzw. der Fäden vorgesehen sein, wodurch sich der Faden bzw. das Fadenbündel verkürzen und eine Kraftwirkung vergrößern lässt. Durch das Erwärmen des Metallkerns ziehen sich die Fäden zusammen, so dass sich die Fäden zu verspinnen beginnen und somit zusammenziehen. Bei Wegnahme der Wärmezufuhr können sich die Fäden wieder entspinnen und werden wieder langgezogen bzw. in deren Ausgangsform bewegt.

In Figur 2 ist ein Beispiel für ein Planetengetriebe 3 gezeigt. Das Planetengetriebe 3 weist ein Gehäuse 6 mit einem zylindrischen Hohlraum 15 auf. An einer zylinderförmigen Mantelfläche 7 einer Innenseite des Gehäuses 6 ist vorzugsweise eine Innenverzahnung (nicht gezeigt) ausgebildet. Im Hohlraum 15 ist zentral und um die Zylinderachse 16 des Hohlraums 15 drehbar ein Sonnenzahnrad 8 angeordnet, das durch mehrere Planetenzahnräder 9 - von denen nur eines in Figur 2 gezeigt ist - in dessen zentraler Position gehalten und drehbar gelagert ist.

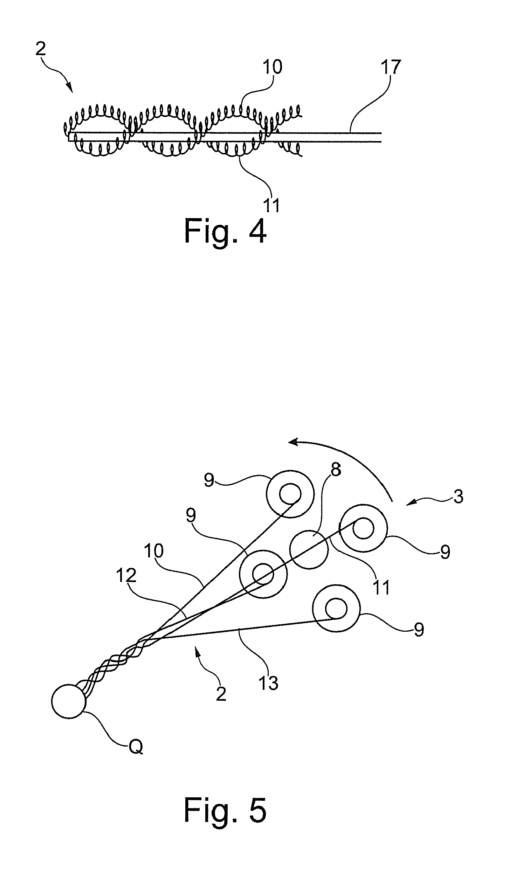

Wie in Figur5 gezeigt, kann an jedem von z.B. vier Planetenzahnrädern 9 jeweils einer der Fäden 10, 11, 12, 13 fixiert sein. Durch eine Drehung des Sonnenzahnrades 8 gegenüber dem Gehäuse 6 werden die Planetenzahnräder 9 derart angetrieben, dass dabei jedes Planetenzahnrad 9 sich um seine eigene Achse in einer Drehrichtung R1 und in einer entgegengesetzten Drehrichtung R2 um die Zylinderachse des Hohlraums 15 dreht. Die an den Planetenzahnrädern 9 fixierten Fäden 10, 11, 12, 13 führen entsprechende Drehbewegungen mit übereinstimmendem Drehsinnen R1 und R2 aus. Durch eine orts- und drehfeste Fixierung an einer zweiten, vom Planetengetriebe entfernten Stelle Q, an der sich ein insbesondere ruhendes Gegenelement (nicht gezeigt) befinden kann, lässt sich jeder der Fäden 10, 11, 12, 13 durch eine Verwindung um eine eigene Achse sowie durch ein Verspinnen mit den anderen Fäden anspannen. Durch eine Bewegung, bei der die Drehsinne R1 und R2 umgekehrt sind, sind die Fäden entspannbar, wobei durch die Fäden 10, 11, 12, 13 das Planetengetriebe 3 angetrieben ist.

Gemäß einer in Figur 4 schematisch gezeigten Ausführung einer erfindungsgemäßen Antriebsvorrichtung 1 kann ein zentraler Faden 17 vorgesehen sein, um den sich bei Drehungen zum Spannen der Antriebsvorrichtung zwei Fäden 10 und 11 spinnen lassen. Der zentrale Faden 17 kann beispielsweise zwischen einem Sonnenzahnrad 8 und einem relativ dazu orts- und drehfest und durch einen Zwischenraum entfernt angeordneten Gegenelement (nicht gezeigt) gespannt sein. Dadurch lässt sich bei hohen Torsionsspannungen in den Fäden 10 und 11 vorteilhaft vermeiden, dass sich die einander umwickelnden Fäden 10 und 11 mehrfach um sich selbst verwinden und wickeln, wodurch ein schnelles Abwickeln und Entspannen der Fäden 10 und 11 gebremst oder gar blockiert sein kann.

### Bezugszeichenliste:

- 1: Antriebsvorrichtung
- 2: Schnurantrieb
- 3: Planetengetriebe
- 4: Heizung
- 5: Motor
- 6: Gehäuse
- 7: Mantelfläche
- 8: Sonnenzahnrad
- 9: Planetenzahnrad
- 10: Faden
- 11: Faden
- 12: Faden
- 13: Faden
- 15: Hohlraum
- 16: Zylinderachse
- 17: Faden

## Patentansprüche

1. Antriebsvorrichtung (1) für ein Möbelteil mit einem Drehelement (8, 9), das in der Antriebsvorrichtung um eine Drehachse (16) drehbar gelagert ist, **dadurch gekennzeichnet, dass** in Richtung der Drehachse (16) ein Zwischenraum zwischen dem Drehelement (8, 9) und einem Gegenelement ausgebildet ist, wobei das Drehelement (8, 9) mit dem Gegenelement durch mindestens einen Faden (10, 11, 12, 13) verbunden ist, der entlang der Drehachse (16) im Zwischenraum geführt ist, wobei der Faden (10, 11, 12, 13) am Drehelement (8, 9) und am Gegenelement derart befestigt ist, dass der Faden (10, 11, 12, 13) durch eine Drehbewegung des Drehelements (8, 9) gegenüber dem Gegenelement mit einer Torsionskraft beaufschlagbar ist, mit der sich das Möbelteil bewegen lässt.

2. Antriebsvorrichtung (1) nach Anspruch 1, **dadurch gekennzeichnet, dass** die Antriebsvorrichtung (1) eine Arretiereinrichtung aufweist, mit der die Torsionskraft speicherbar ist.

3. Antriebsvorrichtung (1) nach einem der vorgenannten Ansprüche, **dadurch gekennzeichnet, dass** das Drehelement (8, 9) und das Gegenelement durch mehrere Fäden (10, 11, 12, 13) entlang der Drehachse (16) durch den Zwischenraum hindurch verbunden sind.

4. Antriebsvorrichtung (1) nach einem der vorgenannten Ansprüche, **dadurch gekennzeichnet, dass** die Antriebsvorrichtung (1) mehrere Drehelemente (8, 9) aufweist, die durch mindestens einen Faden (10, 11, 12, 13) mit dem Gegenelement verbunden sind.

5. Antriebsvorrichtung (1) nach einem der vorgenannten Ansprüche, **dadurch gekennzeichnet, dass** das Gegenelement mit einem Gehäuse (6) der Antriebsvorrichtung (1) verbunden ist.

6. Antriebsvorrichtung (1) nach einem der vorgenannten Ansprüche, **dadurch gekennzeichnet, dass** das Drehelement (8, 9) Bestandteil eines Zahnradgetriebes (3) ist.

7. Antriebsvorrichtung nach einem der vorgenannten Ansprüche, **dadurch gekennzeichnet, dass** das Drehelement (8, 9) ein Planetenrad (9) eines Planetengetriebes (3) ist.

8. Antriebsvorrichtung nach einem der vorgenannten Ansprüche, **dadurch gekennzeichnet, dass** das Drehelement (8, 9) ein Sonnenrad (8) eines Planetengetriebes (3) ist.

9. Antriebsvorrichtung (1) nach einem der vorgenannten Ansprüche, **dadurch gekennzeichnet, dass** der Faden (10, 11, 12, 13) Fasern aufweist, die eine Kohlenstoffnanoröhre umfassen.

10. Antriebsvorrichtung (1) nach einem der vorgenannten Ansprüche, **dadurch gekennzeichnet, dass** der Faden (10, 11, 12, 13) eine Faser aus Metall umfasst.

11. Antriebsvorrichtung (1) nach einem der vorgenannten Ansprüche, **dadurch gekennzeichnet, dass** konzentrisch entlang der Drehachse (16) ein Mittelfaden (17) angeordnet ist.

12. Antriebsvorrichtung (1) nach einem der vorgenannten Ansprüche, **dadurch gekennzeichnet, dass** die Antriebsvorrichtung (1) eine Heizeinrichtung (4) umfasst, die zum Erwärmen des Fadens (10, 11, 12, 13) vorgesehen ist.

13. Antriebsvorrichtung (1) nach einem der vorgenannten Ansprüche, **dadurch gekennzeichnet, dass** der Faden (10, 11, 12, 13) zwischen zwei Elektroden angeordnet ist.

14. Antriebsvorrichtung (1) nach einem der vorgenannten Ansprüche, **dadurch gekennzeichnet, dass** der Faden (10, 11, 12, 13) in einer Elektromagnetspule angeordnet ist.

15. Möbel mit einer Antriebsvorrichtung (1) nach einem der vorgenannten Ansprüche.
